# EUROPEAN PATENT SPECIFICATION

(11) **EP 3 647 300 B1**
(45) Date of publication and mention of the grant of the patent: **23.04.2025**
(21) Application number: 18203979.2
(22) Date of filing: 01.11.2018
(51) Int. Cl.: C05D 1/02, C05D 1/00, C05D 9/02, C01D 5/02

(54) **POTASSIUM SULFATE CONTAINING TRACE ELEMENTS**
SPURENELEMENTE ENTHALTENDES KALIUMSULFAT
SULFATE DE POTASSIUM CONTENANT DES OLIGO-ÉLÉMENTS

(43) Date of publication of application: 06.05.2020
(73) Proprietor: Tessenderlo Group NV, 1050 Brussel (BE)
(72) Inventor: Strobbe, Mark, 3980 Tessenderlo (BE); Losson, Patrick, 1180 Brussel (BE)
(74) Representative: Hoyng Rokh Monegier B.V.

(56) References cited:
- EP-B1- 0 488 199
- US-A- 2 082 809
- US-A- 3 620 709
- US-B1- 7 780 941
- DATABASE WPI Week 198543, Derwent World Patents Index; AN 1985-267351, XP002790930
- DATABASE WPI Week 201049, Derwent World Patents Index; AN 2010-D19608, XP002790931
- DATABASE WPI Week 200863, Derwent World Patents Index; AN 2008-K48755, XP002790932

## Description

### BACKGROUND OF THE INVENTION

### Field of the Invention

An improved potassium sulfate is provided. Furthermore, the present invention is concerned with a process of producing such improved potassium sulfate in a muffle furnace.

### Description of the Related Art

Fertilizers are well known for agricultural and horticultural application. A number of nutrients are thereby supplied to the soil or growing medium of the plants. Nutrients such as nitrogen, phosphorous, potassium and sulfur are supplied in relatively large amounts, while many other elements are supplied in lower amounts, as micronutrients.

Potassium sulfate (K₂SO₄, also called Sulfate of Potash, or SOP) is a well-known fertilizer for providing potassium and sulfur. The fertilizer is most commonly used in granular form for providing granular fertilizer to the soil. Powdered, soluble forms are available as well, for fertigation and foliar spray.

The Mannheim process is a well-known process for producing potassium sulfate. Chemically, the process consists of two steps: (i) a reaction of potassium chloride and sulfuric acid to potassium bisulfate and hydrogen chloride as a by-product, and (ii) a reaction to potassium sulfate and hydrogen chloride. The steps are shown by reaction formula (1) and (2).

KCl + H₂SO₄ → KHSO₄ + HCl (1) Exothermic reaction

KHSO₄ + KCl → K₂SO₄ + HCl (2) Endothermic reaction

In order to achieve at least about 90% chloride conversion, the Mannheim process generally uses a reaction temperature of the product of higher than about 300°C, generally up to about 600°C.

Generally, the potassium sulfate obtained from the Mannheim process has a moderate chloride content (2% to about 2.5% by weight). The use of potassium sulfate with high chloride values such as >2.5% is less desirable for the agricultural and industrial markets.

In order to lower the amount of chloride, it is possible to use an excess sulfuric acid, such that more chloride can be liberated as HCl gas. For example, US 4342737 describes that KCl is reacted with sulfuric acid at an equivalent ratio of 1.07-1.40 at temperatures from about 250°C to about 500°C.

The Mannheim process, as carried out currently, is performed in essentially the same manner as developed in Germany during the nineteenth century. It involves a furnace consisting of two parts, a combustion chamber at the top and a reaction chamber underneath. An example of a Mannheim furnace is described in e.g. US 4303619.

The granular potassium sulfate product has not been subject to changes for a long time. A process for the formation of a potassium sulfate product comprising micronutrients is disclosed in JP S60 180913 A.

It is an object of the present invention to provide an effective and efficient process for the production of an improved potassium sulfate using a Mannheim process.

It is another object of the invention to provide an improved solid potassium sulfate.

It is yet another object to overcome some of the issues related to adding micronutrients via for instance a simple blending. Micronutrients are often small in particle size and hence can segregate in a bulk blend.

### SUMMARY OF THE INVENTION

To attain one or more objectives, the present invention provides a process for the preparation of a potassium sulfate product comprising micronutrients, said process comprising the steps of:
- providing a potassium sulfate, that comprises from 1 to 15 wt% of acidic compounds, calculated as sulfuric acid (100%), wherein the amount of potassium in the potassium sulfate so produced is between 40 and 51 wt%, calculated as K₂O, and wherein the potassium sulfate provided is at a temperature of between 50°C and 500°C, when adding the one or more micronutrients,
- mixing said potassium sulfate, prior to granulation, with one or more micronutrients selected from the group consisting of sodium, zinc, manganese, iron, molybdenum, copper, boron, or mixtures thereof, wherein an amount of metal compounds is reacted to obtain between 0.1 and 3 wt% of metal salts, calculated as metal ions other than potassium and applying a granulation step.

Preferably the potassium sulfate is one that is prepared in a muffle furnace, via the Mannheim process. The potassium sulfate provided contains from 1 to about 15 wt% of "acidic compounds", calculated as sulfuric acid.

In the above the term "micronutrients" refers in particular to "plant micronutrients". Essential plant nutrients include primary nutrients, secondary or macronutrients, and trace or micronutrients. Micronutrients can include boron, zinc, manganese, nickel, molybdenum, copper, iron, chlorine, sodium or combinations thereof. Secondary nutrients can include, but are not limited to calcium, magnesium or combinations thereof. Throughout the invention, for the sake of simplicity, the term "micronutrients" as used herein refers to and micronutrients. Preferred in the use of the invention is the use of water soluble micronutrients. Examples include but are not limited to water soluble boron, water soluble copper, water soluble manganese and/or water soluble zinc. Sodium and chlorine are not tolerated by all crops or soils and can lead to salt stress. They are hence less preferred.

Micronutrients in the invention can be provided as salts, as chelates, as a natural organic complex and/or as an industrial metal bearing by-product (the latter if low in heavy metal content). A few examples of micronutrient sources that may be used are anhydrous borax, zinc sulfate monohydrates, manganese sulfates, sodium molybdate dehydrates, manganous sulfates etc. Micronutrients are often provided in the form of phosphates and/or sulfates. Boron can be provided under the form of boric acid or as e.g. an octoborate.

Micronutrients of the invention are added to a potassium sulfate feed stream when the temperature of the potassium sulfate is between about 50°C and about 500°C. More preferred temperatures follow below.

The micronutrients in the context of the invention are sodium, zinc, manganese, iron, molybdenum, copper, boron, or mixtures thereof (of any of these) . Particularly preferred are zinc, manganese, iron, molybdenum, copper, boron, or mixtures thereof (of any of these). Even more preferred are zinc, manganese, iron, molybdenum, copper, or mixtures thereof (of any of these). It was found that suitable micronutrients with sufficient water solubility can be added to the feed stream of a potassium sulfate that is produced in a muffle furnace.

Micronutrients according to the invention can be added at various moments to the potassium sulfate feed stream. In one embodiment of the invention, the one or more micronutrients are added shortly after the potassium sulfate leaves the reaction chamber, *in casu* the muffle furnace, at the latest just prior to the granulation process. In another embodiment of the invention, the one or more micronutrients are added at the end of the production process, when the potassium sulfate has its final characteristics but before it leaves the reaction chamber, *in casu* the muffle furnace. The one or more micronutrients are added prior to the granulation process, at any stage between leaving the muffle furnace and reaching the granulation unit.

The potassium sulfate has a temperature of at least about 50°C, preferably at least about 80°C and more preferably at least about 100°C but preferably not more than 500°, preferably not more than about 450°C, not more than about 400°C.

Soluble micronutrients are generated in situ via a reaction with "acidic compounds" that are present in the potassium sulfate produced.

Provided herein is hence also a process for the preparation of a potassium sulfate product comprising micronutrients, said process comprising the steps of :
- providing a potassium sulfate that comprises from 1 to 15 wt% (weight percentage) of acidic compounds, calculated as sulfuric acid (100%),
- reacting at least part of said acidic compounds present in the potassium sulfate, either directly or indirectly, with one or more metal compounds chosen from an oxide, carbonate, bicarbonate, hydroxide or mixture thereof, in which the metal is chosen from zinc, manganese, iron, molybdenum, copper, or mixtures thereof, and
- converting thereby the metal compound into the corresponding metal salts, more in particular the corresponding metal sulfates.

The potassium sulfate provided, as indicated above, has a temperature of about 100°C to about 500°C, preferably at most 450°C, more preferably at most 400°C at the moment of adding these one or more metal compounds.

Examples of suitable metal compounds include zinc oxide, manganese oxide, iron oxide, molybdenum oxide, potassium hydroxide, iron hydroxide, iron carbonate, iron bicarbonate, sodium carbonate, sodium bicarbonate, sodium hydroxide, manganese carbonate, manganese bicarbonate, manganese hydroxide, copper carbonate, copper bicarbonate, copper hydroxide, or mixtures thereof (of any of these). Preferred metal compounds are zinc oxide, manganese oxide, iron oxide, molybdenum oxide, iron hydroxide, iron carbonate, iron bicarbonate, manganese carbonate, manganese bicarbonate, manganese hydroxide, copper carbonate, copper bicarbonate, copper hydroxide, or mixtures thereof (of any of these).

Preferred metals are: zinc, manganese, iron, molybdenum, copper, or mixtures thereof (of any of these). Even more preferred are zinc and/or manganese. Most preferred is zinc. A preferred metal compound in the present invention is an oxide. Preferably the metal compound(s) used comprises (or consists of) zinc oxide.

Preferably the amount of "acidic compounds" in the potassium sulfate is between about 3 and about 12 wt%, more preferably between about 5 and about 10 wt%.

In the above process the metal oxide and/or metal carbonate and/or metal bicarbonate and/or metal hydroxide advantageously is/are turned into the corresponding metal "sulfates", at least in part. The process of the invention allows to use cheaper compounds and/or allows to have a conversion into more soluble compounds that can be taken up by the plants. Metal sulfates in general are easily taken up by plants, and provide an advantage in particular when the soil is deficient in certain metals, certain micronutrients.

Preferred metal compounds according to the invention are metal oxides and/or metal carbonates and/or metal bicarbonates. Even more preferred are metal oxides and/or metal carbonates. Most preferred are metal oxides.

Preferably, the step of providing a potassium sulfate comprises the steps of:
- conversion of potassium chloride and sulfuric acid in a muffle furnace wherein the process comprises the steps of: supplying potassium chloride (KCl) and sulfuric acid (H₂SO₄) wherein the amount of sulfuric acid is in molar excess of that of KCl, into the reaction chamber of a muffle furnace at a temperature between about 300 and about 600°C,
- removing potassium sulfate from the muffle furnace, and
- providing the potassium sulfate, preferably at a temperature of between about 100°C and about 400°C.

In a particle embodiment of the invention, also the KCl product provided is one that contains one or more micronutrients as described. Generally however, the KCl product used for economic reasons is not containing any extra micronutrients.

The present invention also relates to products obtainable by any of the processes of the invention. The invention furthermore provides for a solid potassium sulfate product, wherein the amount of potassium in the potassium sulfate is between 40 and 51 wt%, calculated as K₂O, comprising particulates that contain both potassium sulfate as well as one or more micronutrients chosen from sodium, zinc, manganese, iron, molybdenum, copper, boron, or mixtures thereof wherein the potassium sulfate produced comprises between 0.1 and 3 wt% of metal salts, calculated as metal ions other than potassium. In a preferred embodiment of the invention, said particulates are particles, more in particular granules. Preferred lists of micronutrients are given above. Provided in particular is a solid potassium sulfate product comprising particles that contain both potassium sulfate as well as one or more metal sulfates wherein the metal is selected from the group consisting of zinc, sodium, manganese, magnesium, iron, molybdenum, copper, boron, or mixtures thereof (of any of these). The "sulfates" can be sulfates (SO₄), bisulfates (HSO₄), or a mixture of both. In it broadest sense, the term "sulfates" can also refer to pyrosulfates. It is preferred that sulfates (SO₄) are present. Preferred lists of micronutrients and preferred lists of metal compounds are provided above.

The micronutrients as described are entrained within a potassium sulfate particulate, more in particular within a potassium sulfate granule.

An advantage of the processes and materials of the invention is that the one or more micronutrient components will be more or less uniformly distributed in the potassium sulfate product, which typically is in the form of a granule, possibly a spherical granule. Alternatively the potassium sulfate product of the invention is in powder form. It can also be in compacted form. A uniform application of micronutrients to a plant growing area in general leads to a better uptake by the plants. A uniform size distribution reduces or eliminates segregation during material handling and transfer.

The foregoing and other objects, features and advantages of the present invention will be apparent to those skilled in the art from the following detailed description and appended claims.

### DESCRIPTION OF ILLUSTRATIVE EMBODIMENTS

The term "acidic compounds" refers to acids as well as to products that in the presence of water can generate acids, and to mixtures of both.

The term "sulfuric acid" means sulfuric acid of at least about 90% concentration, and preferably at least about 91, 92, 93, or 94 % concentration or above, more preferably at least about 95, 96, 97, 98 up to 99% concentration, like for example about 96% grade or 98% grade.

The general term "sulfates" is used in the invention to refer to sulfates (SO₄⁻²), to hydrogen sulfates and to mixtures of both. Most often, sulfates (SO₄⁻²) and their mixtures with hydrogen sulfates are referred to.

Potassium sulfate refers to a compound comprising potassium and sulfate. The amount of potassium in the potassium sulfate, calculated as K₂O, is at least about 40 wt%, preferably at least about 47 wt%. Typically the amount of sulfur in the potassium sulfate is at least about 48wt%, preferably at least about 50 wt%, calculated as SO₄.

The potassium sulfate of the invention preferably comprises a certain amount of acidic compounds that are capable of converting the metal compound of the invention into a metal salt, either directly or indirectly.

The level of (remaining) acidic compounds in potassium sulfate can be measured, for example via an acid-base titration, measuring the amount of protons (H⁺) formed, and is calculated as amount of sulfuric acid (at 100%).

Potassium sulfate with an excess acid at a temperature between about 100°C and about 400°C can be provided by heating potassium sulfate, for example as obtained from a Mannheim process. Alternatively, the product from a Mannheim process can be used after it is removed from the muffle furnace (in situ), before it is cooled to room temperature.

Preferably, the temperature of the reaction between the micronutrients and the acidic compounds comprising potassium sulfate is between about 100°C and about 250°C. In a preferred embodiment, this temperature is between about 100°C and about 180°C.

A Mannheim process uses an excess sulfuric acid over potassium chloride, which is preferably between about 1 and about 20% on mole basis, preferably this excess is between about 1 and about 10% on mole basis . Therefore, the molar ratio of sulfuric acid to 2 moles of potassium chloride generally is from about 1.01 to about 1.2, preferably from about 1.02 to about 1.1, more preferably from about 1.05 to about 1.1.

The reaction between the acidic compounds in the potassium sulfate and the micronutrient metal compound generally is aided by mixing, and the zone where the reaction takes place is therefore for example provided with mixing devices, such as mixing screws; the chamber where this reaction takes place may itself be a tumbling device.

In this zone where this reaction takes place, the required metal compound, or mixtures of metal compounds in the form of a metal oxide, carbonate, bicarbonate, hydroxide or mixtures thereof, is or are added.

The metal compound preferably is in the form of a slurry of the metal compound in water. This aids in a fast and effective reaction. The amount of solids in the slurry generally can be between about 20 and about 80 wt%, preferably between about 30 and about 50 wt%.

A Mannheim process for producing potassium sulfate generally comprises the following steps.

The raw materials potassium chloride (KCl) and sulfuric acid (H₂SO₄) are dosed in the reaction chamber. For the next reaction step heat is provided, which is done in a muffle furnace by applying heat above the surface (dome) of the reaction chamber. This heat is supplied by burning a hydrocarbon source like gas or fuel.

In this way the contents of the reaction chamber, through its upper surface, is heated, generally to achieve a product temperature of between about 300°C and about 600°C, like for example about 300°C and about 500°C, or about 400°C and about 600°C.

In addition to applying heat, the content of the furnace is slowly mixed by continuous mixing with rakes, screws or the like.

Generally, the process of the present invention relates to a continuous industrial process for the production of potassium sulfate. The process can be stably practiced on a commercial scale. In some cases, the potassium sulfate after production will be neutralized, at least in part, with for instance lime or any other suitable means (see GB 2053881). Today the standard potassium sulfate is compacted then broken or crushed and sieved. This is the more standard granulation step. Other forms of granulation that may be used are Physical/steam granulation and chemical granulation. Compaction granulation is generally preferred. Alternatively, spherical granules can be prepared using a spherical granulation step, using for instance a high shear mixer, a pan granulator or a granulation drum. Additionally the processing can contain one or more of the following steps: drying, grinding, polishing, sizing, packaging etc.

In an in situ preparation of the product of the invention, the reaction product from the muffle furnace will be transported to a reaction zone for the reaction with the metal compound(s) of the invention. Alternatively, a product at room temperature can be heated. In situ processing has the advantage, that no heating energy has to be applied.

Preferably the potassium sulfate used in the process of the invention has a temperature of between about 100°C and about 400°C when the metal compound(s) of the invention are introduced. Preferably the conversion from metal compound into metal sulfate takes place at a temperature from about 100°C to about 400°C, preferably from about 100°C to about 250°C. This often means cooling down the potassium sulfate coming out of the muffle furnace before its reaction with the metal compound(s) of the invention. Cooling can be done in any possible way, including natural convection and/or air cooling.

Alternatively, a potassium sulfate produced before by a Mannheim process as described, but now at lower temperature, may be heated preferably to between about 100°C and about 250°C, for example using waste heat present in the process.

Preferably, the conversion of metal compounds to metal sulfates takes place in the presence of water or at least some moisture.

An amount of metal compound is provided to achieve between about 0.1 and about 3 wt% of metal (calculated as metal ions) in the potassium sulfate.

The metal compounds, in the form of oxides, carbonates, bicarbonates, hydroxides or mixtures thereof are virtually insoluble in water. It is an advantage of the invention that the reaction at a temperature between about 100°C and about 400°C, preferably between about 100°C and about 250°C, provides for better soluble metal salts, principally in the sulfate form. Most metal sulfates have a high solubility in water, and in general metal sulfates are easily taken up by the plant. In this way, an efficient process is provided to obtain soluble salts of metals which are useful as micro-nutrients.

Preferably, the metal compound is in the form which is cheapest, which generally is the oxide. Furthermore, the use of oxides is advantageous, as the oxides generally have a (very) low solubility to an extent it deprives its nutrient value, while transferring the oxides into corresponding sulfates increases the solubility substantially.

As explained, the reaction of the invention is performed with a metal oxide, carbonate, bicarbonate, hydroxide or mixtures thereof, in which the metal preferably is chosen from zinc, manganese, iron, molybdenum, copper or mixtures therefrom. Preferably, cheaper oxides are used. These oxides are not considered as soluble in the agricultural area. Therefore, up to now it is considered necessary to buy relatively expensive soluble salts, which are mixed into other fertilizers to be effectively applied as micro-nutrient. This (bulk) blending process in addition provides several disadvantages as explained above.

The amount of metal compounds is chosen such, that the potassium sulfate so produced comprises between 0.1 and 3 wt% of metal salts, more in particular metal sulfates, the wt% being calculated as metal ions.

Preferably an amount of metal compounds is reacted to obtain between 0.5 and 3 wt% of metal salts, calculated as metal ions.

In a further embodiment, mixtures of metal compounds are used, such that the potassium sulfate so produced comprises between about 0.2 and about 3 wt% total metal ions, other than potassium. Preferably, the mixture comprises two to three different metal ions, each comprising between about 0.1 and about 2.9 wt%.

In mixtures, preferably two to three different micronutrients other than potassium are used. Preferably two to three different metal ions are then used. The different micronutrients can be provided each separately, via a different feed; or they can be provided to the potassium sulfate in the form of a mixture. A preferred list to choose the micronutrients from are zinc and/or boron and/or manganese. Particularly preferred are a combination of zinc and manganese; a combination of boron and manganese; or a combination of zinc, boron and manganese.

The reaction at elevated temperatures is largely a solid state reaction that provides metal salts, in particular metal sulfates, which are largely soluble in water. Preferably, the process according to the invention provides products, wherein the solubility of the metal ion is about 50% or higher, about 60% or higher, about 70% or higher; preferably about 80, 81, 82, 83, 84% or higher, about 85, 86, 87, 88, 89 % or higher; more preferably about 90% or higher. This relative to the total amount of metals present.

The product of the invention relates to solid potassium sulfate comprising particles having both potassium sulfate and metal sulfates of micronutrients chosen from zinc, manganese, iron, molybdenum, copper, or mixtures thereof. Preferred lists of metals are given above. The reaction is largely a solid state reaction, which provides particles having both potassium sulfate, and the metal sulfate. Hence, the product of the invention is different from a physical mixture of potassium sulfate and micronutrients-metal sulfates.

The preferred metal compound is chosen from zinc, manganese or mixtures thereof. The most preferred metal compound is a zinc compound.

Preferably, the potassium sulfate of the invention comprises zinc, and the amount of zinc in the potassium sulfate is between about 0.5 and about 2.5 wt%, preferably between about 1.5 and about 2 wt%.

The product of the invention is a potassium sulfate wherein the amount of potassium is between 40 and 51 wt%, calculated as K₂O. Preferably, the amount of potassium in the potassium sulfate is between about 47 and 51 wt%, calculated as K₂O, and even more preferably between about 49 and 51 wt%.

Generally, the product of the invention is a potassium sulfate having an amount of sulfur, calculated as SO₄, of about 48 wt% or more, preferably of about 50 wt% or more. Generally, the amount of sulfur, calculated as SO₄, will be about 59 wt% or less, preferably about 58 wt% or less.

The amount of chloride in the potassium sulfate of the invention generally will be about 3 wt% or less, preferably about 2.7 wt% or less, and more preferably about 2.5 wt% or less.

In an alternative way, the product of the invention can be made by adding a metal compound chosen from an oxide, carbonate, bicarbonate, hydroxide, or mixtures thereof, in which the metal is chosen from zinc, sodium, manganese, iron, molybdenum, copper, or mixtures thereof together with potassium chloride at the initial step of the Mannheim process. In this way, a fully homogeneous product is obtained, with virtually all micronutrients as metal "sulfates".

The potassium sulfate obtained from the Mannheim process generally is in a powder form, and generally has a particle size of about 2 mm and lower. For use as a granular fertilizer, that can be easily spread over land, and mixed with other granular fertilizers, it is preferred to apply a compaction step, or a granulation step. Such granulation steps are common in the art.

In a preferred granular form, the potassium sulfate of the invention has > 90% of the particles between about 1.5 and about 5 mm. More preferably, more than about 95% of the particles (by weight) have a size between about 1.5 and about 5 mm. A range with at least about 90% between about 2 and about 4 mm is most preferred. The granule can be a spherical granule.

The hardness of the granules of the invention preferably is about 2.5 kg or higher, more preferably about 3 kg or higher.

Preferably, the potassium sulfate of the invention when 1 gram is dissolved in about 100 ml water exerts a pH of between about 2.5 and about 7, more preferably between about 2.5 and about 6.

To the potassium sulfate of the invention, one or more of the following can be added: a compacting aid, a coloring agent, additives like waxes and/or one or more binding resins and/or grinding resins. The improved potassium sulfate of the invention can be used as fertilizer an sich, or in combinations with other fertilizers in the art, like conventional NPK fertilizers.

Although specific embodiments have been described, these are examples only and are not limiting upon the scope of the invention.

### EXAMPLES

### Measurement methods

The amount of (remaining) acidic compounds in the potassium sulfate produced in a muffle furnace is measured by dissolving 100 milligram of potassium sulfate produced in a muffle furnace in 100 ml water, and titrating 10 ml of this solution with 0.1 molar NaOH, and calculating the amount of acidic compounds as H₂SO₄ (assumed to be at 100%) from the amount of H⁺ ions measured.

Hardness was measured with a Hardness meter (Type Indelco 201-M).

Color was measured via a Colorimeter (type Minolta CR 310).

The K, S, Cl and Na-content in examples was determined via XRF (X-ray Fluorescence) and recalculated as K₂O, SO₄, Cl and Na₂SO₄.

In order to measure the solubility of the Zn, 1 g of sample was dissolved in 100 ml demiwater (at about 20°C) for about 5 min while stirring. Thereafter, the liquid was filtered, and the filtrate was analysed with ICP-MS (Inductively Coupled Plasma Mass Spectroscopy) for the amount of Zn. As ZnO is virtually insoluble, while ZnSO₄ is well soluble, it can be assumed that all dissolved Zn originates from ZnSO₄. In a comparable way, the solubility of other metals can be measured. With this method the soluble metal concentration is determined versus the total (theoretic) metal concentration, and expressed as weight percentages.

Particle size analysis: the particles were screened over a sieve, and respective fractions were measured (weight basis).

### Preparation Example A

K₂SO₄ as obtained from a Mannheim process after the muffle furnace, produced with about 6% excess sulfuric acid over KCl, was analysed for acidic compounds present (which were denoted as amount equivalent to H₂SO₄). The product contained near 2.7 wt% of acidic compounds, calculated as H₂SO₄.

### Examples 1-3 and comparative experiment B

To K₂SO₄ from a Mannheim process as described in Preparation Example 1, 2.5 wt% ZnO resp. 2.0 wt% ZnO were added and continuously mixed at ~125°C. After mixing for ~20 min, and further cooling to below ~80 °C, the particulate product was packed in sacks of 25 kg and put in carton boxes. Boxes were transported to a compaction/breaking operation.

In this product according to example 1, 90.5% of the zinc appears soluble.

After granulation in a compaction device, the analysis yielded the following results.

| | ***Comp Exp B*** | ***Example 2*** | ***Example 3*** |
|---|---|---|---|
| **density (not tapped)** | 1.14 | 1.15 | 1.17 |
| **hardness(kg):** | 3.174 | 3.477 | 3.728 |
| **Whiteness (colour):** | | | |
| granules: | | | |
| L: | 80.82 | 75.65 | 75.75 |
| a: | +1.22 | +0.56 | +0.55 |
| b: | +5.73 | +4.45 | +4.81 |
| powder: | | | |
| L: | 93.17 | 90.73 | 91.21 |
| a: | +0.45 | +0.32 | +0.34 |
| b: | +3.97 | +4.09 | +3.74 |
| **% Zn total:** | - | 2.0 | 1.6 |
| **% Zn diss.H₂O:** | - | 1.64 | 1.37 |
| **% Zn diss.H₂O/ Zn total:** | - | 82.4 | 83.5 |
| **XRF:** | | | |
| % K₂O: | 51.24 | 49.54 | 49.69 |
| %SO4: | 54.82 | 54.70 | 55.00 |
| % Na₂SO₄: | 1.47 | 1.77 | 1.71 |
| %Cl: | 1.32 | 2.42 | 2.31 |

The results show that zinc oxide could be reacted with remaining acidic compounds in a potassium sulfate to provide soluble zinc salts, in pareticular soluble zinc sulfates. The potassium sulfate fortified with zinc was effectively granulated, yielding granules with comparable strength to common potassium sulfate (comparative Example B, without added zinc). The product is slightly less white.

## Claims

1. Process for the preparation of a potassium sulfate product comprising micronutrients, said process comprising the steps of:
- providing a potassium sulfate, that comprises from 1 to 15 wt% of acidic compounds, calculated as sulfuric acid (100%), wherein the amount of potassium in the potassium sulfate so produced is between 40 and 51 wt%, calculated as K₂O, and wherein the potassium sulfate provided is at a temperature of between 50°C and 500°C, when adding the one or more micronutrients,
- mixing said potassium sulfate, prior to granulation, with one or more micronutrients selected from the group consisting of sodium, zinc, manganese, iron, molybdenum, copper, boron, or mixtures thereof, wherein an amount of metal compounds is reacted to obtain between 0.1 and 3 wt% of metal salts, calculated as metal ions other than potassium, and
- applying a granulation step.

2. The process according to the preceding claim, wherein the potassium sulfate provided is at a temperature of between 100°C and 400°C, when adding the one or more micronutrients.

3. The process according to claim 1, said process comprising the steps of:
- providing a potassium sulfate that comprises from 1 to 15 wt% of acidic compounds, calculated as sulfuric acid (100%), and that has a temperature of between 100°C and 400°C,
- reacting at least part of said acidic compounds present in the potassium sulfate, either directly or indirectly, with one or more metal compounds chosen from an oxide, carbonate, bicarbonate, hydroxide or mixture thereof, in which the metal is chosen from zinc, manganese, iron, molybdenum, copper, or mixtures thereof, and
- converting thereby the metal compound into the corresponding metal salts, more in particular the corresponding metal sulfates.

4. The process according to any one of the preceding claims, wherein the amount of metal compounds is reacted to obtain between 0.5 and 3 wt% of metal salts, calculated as metal ions other than potassium.

5. The process according to any one of claims 3 to 4, wherein at least two of said metal compounds are being used, generating a mixture that comprises for instance two to three different metal ions, each comprising between 0.1 and 2.9 wt%, calculated as amount of metal ions only.

6. The process according to any one of the preceding claims, wherein the conversion of the metal compounds into corresponding metal sulfates is performed at a temperature of between 100°C and 250°C, preferably between 100°C and 180°C.

7. The process according to any one of the preceding claims, wherein the metal in the metal compound is chosen from zinc and/or manganese, preferably is zinc.

8. The process according to any one of the preceding claims, wherein the metal compound is an oxide, preferably is zinc oxide.

9. A solid potassium sulfate product, obtained by the process of claim 1, wherein the amount of potassium in the potassium sulfate is between 40 and 51 wt%, calculated as K₂O, comprising granules that contain both potassium sulfate as well as one or more micronutrients selected from the group consisting of sodium, zinc, manganese, iron, molybdenum, copper, boron, or mixtures thereof, wherein the potassium sulfate product comprises between 0.1 and 3 wt% of metal salts, calculated as metal ions other than potassium.

10. The solid potassium sulfate product according to the preceding claim, wherein said particles contain metal sulfates of micronutrients, with the metal being chosen from zinc, manganese, iron, molybdenum, copper, or mixtures thereof.

11. The potassium sulfate product according to the preceding claim, wherein the solubility of the metal ion of the metal sulfates in the end product is about 80% or higher, preferably about 90% or higher.

12. The potassium sulfate product according to any one of claims 9 to 11, wherein the metal comprises zinc, and the amount of zinc in the potassium sulfate product is between 0.5 and 2.5 wt%, preferably between 1.5 and 2 wt%.

13. The potassium sulfate product according to any one of claims 9 to 12, comprising two or more different micronutrients that preferably are selected from the group consisting of zinc and/or boron and/or manganese.

14. The potassium sulfate product according to any one of claims 9 to 13, wherein the amount of potassium in the potassium sulfate is between 47 and 51 wt%, calculated as K₂O; and, wherein the amount of sulfur in the potassium sulfate is between 48 and 59 wt%, calculated as SO₄; preferably is between 50 and 58 wt%, calculated as SO₄.

15. The potassium sulfate product according to any one of claims 9 to 14, wherein the potassium sulfate is in granular form, having 90% of the particles between 1.5 and 5 mm, and preferably has a hardness of about 2.5 kg or higher, more preferably about 3 kg or higher.

16. The potassium sulfate product according to any one of claims 9 to 15, wherein the potassium sulfate, when about 1 gram is dissolved in about 100 ml water, exerts a pH of between 2.5 and 7.

## Patentansprüche

1. Verfahren für die Herstellung eines Kaliumsulfatprodukts, umfassend Mikronährstoffe,
das Verfahren umfassend die Schritte:
- Bereitstellen eines Kaliumsulfats, das zu 1 bis 15 Gew.-% saure Verbindungen umfasst, berechnet als Schwefelsäure (100 %), wobei die Menge an Kalium in dem so produzierten Kaliumsulfat zwischen 40 und 51 Gew.-% liegt, berechnet als K₂O, und wobei das bereitgestellte Kaliumsulfat bei einer Temperatur zwischen 50 °C und 500 °C ist, wenn der eine oder die mehreren Mikronährstoffe zugegeben werden,
- Mischen des Kaliumsulfats vor einer Granulierung mit einem oder mehreren Mikronährstoffen, die aus der Gruppe ausgewählt sind, bestehend aus Natrium, Zink, Mangan, Eisen, Molybdän, Kupfer, Bor oder Mischungen davon, wobei eine Menge an Metallverbindungen umgesetzt wird, um zu zwischen 0,1 und 3 Gew.-% Metallsalze zu erhalten, berechnet als Metallionen außer Kalium, und
- Anwenden eines Granulierungsschrittes.

2. Verfahren nach dem vorstehenden Anspruch, wobei das bereitgestellte Kaliumsulfat bei einer Temperatur zwischen 100 °C und 400 °C ist, wenn der eine oder die mehreren Mikronährstoffe zugegeben werden.

3. Verfahren nach Anspruch 1, das Verfahren umfassend die Schritte:
- Bereitstellen eines Kaliumsulfats, das zu 1 bis 15 Gew.-% saure Verbindungen umfasst, berechnet als Schwefelsäure (100 %), und das eine Temperatur zwischen 100 °C und 400 °C aufweist,
- Umsetzen von mindestens einem Teil der sauren Verbindungen, die in dem Kaliumsulfat vorhanden sind, entweder direkt oder indirekt mit einer oder mehreren Metallverbindungen, die aus einem Oxid, Carbonat, Bicarbonat, Hydroxid oder Mischungen davon ausgewählt sind, wobei das Metall aus Zink, Mangan, Eisen, Molybdän, Kupfer oder einer Mischung davon ausgewählt ist, und
- Umwandeln dadurch der Metallverbindungen in die entsprechenden Metallsalze, insbesondere die entsprechenden Metallsulfate.

4. Verfahren nach einem der vorstehenden Ansprüche, wobei die Menge an Metallverbindungen umgesetzt wird, um zu zwischen 0,5 und 3 Gew.-% Metallsalze zu erhalten, berechnet als Metallionen außer Kalium.

5. Verfahren nach einem der Ansprüche 3 bis 4, wobei mindestens zwei der Metallverbindungen verwendet werden, wobei eine Mischung erzeugt wird, die beispielsweise zwei bis drei verschiedene Metallionen umfasst, jeweils umfassend zwischen 0,1 und 2,9 Gew.-%, berechnet als Menge nur von Metallionen.

6. Verfahren nach einem der vorstehenden Ansprüche, wobei die Umwandlung der Metallverbindungen in entsprechende Metallsulfate bei einer Temperatur zwischen 100 °C und 250 °C, vorzugsweise zwischen 100 °C und 180 °C, durchgeführt wird.

7. Verfahren nach einem der vorstehenden Ansprüche, wobei das Metall in der Metallverbindung aus Zink und/oder Mangan ausgewählt ist, vorzugsweise Zink ist.

8. Verfahren nach einem der vorstehenden Ansprüche, wobei die Metallverbindung ein Oxid, vorzugsweise Zinkoxid ist.

9. Festes Kaliumsulfatprodukt, das durch das Verfahren nach Anspruch 1 erhalten wird, wobei die Menge an Kalium in dem Kaliumsulfat zwischen 40 und 51 Gew.-% liegt, berechnet als K₂O, umfassend Granulate, die sowohl Kaliumsulfat als auch ein oder mehrere Mikronährstoffe enthalten, die aus der Gruppe ausgewählt sind, bestehend aus Natrium, Zink, Mangan, Eisen, Molybdän, Kupfer, Bor oder Mischungen davon, wobei das Kaliumsulfatprodukt zu zwischen 0,1 und 3 Gew. -% Metallsalze umfasst, berechnet als Metallionen außer Kalium.

10. Festes Kaliumsulfatprodukt nach dem vorstehenden Anspruch, wobei die Partikel Metallsulfate von Mikronährstoffen enthalten, wobei das Metall aus Zink, Mangan, Eisen, Molybdän, Kupfer oder Mischungen davon ausgewählt ist.

11. Kaliumsulfatprodukt nach dem vorstehenden Anspruch, wobei die Löslichkeit des Metallions der Metallsulfate in dem Endprodukt etwa 80 % oder höher, vorzugsweise etwa 90 % oder höher ist.

12. Kaliumsulfatprodukt nach einem der Ansprüche 9 bis 11, wobei das Metall Zink umfasst und die Menge an Zink in dem Kaliumsulfatprodukt zwischen 0,5 und 2,5 Gew.-%, vorzugsweise zwischen 1,5 und 2 Gew.-% liegt.

13. Kaliumsulfatprodukt nach einem der Ansprüche 9 bis 12, umfassend zwei oder mehr verschiedene Mikronährstoffe, die vorzugsweise aus der Gruppe ausgewählt sind, bestehend aus Zink und/oder Bor und/oder Mangan.

14. Kaliumsulfatprodukt nach einem der Ansprüche 9 bis 13, wobei die Menge an Kalium in dem Kaliumsulfat zwischen 47 und 51 Gew.-% liegt, berechnet als K₂O; und wobei die Menge an Schwefel in dem Kaliumsulfat zwischen 48 und 59 Gew.-% liegt, berechnet als SO₄; vorzugsweise zwischen 50 und 58 Gew.-% liegt, berechnet als SO₄.

15. Kaliumsulfatprodukt nach einem der Ansprüche 9 bis 14, wobei das Kaliumsulfat in Granulatform vorliegt, die 90 % der Partikel zwischen 1,5 und 5 mm aufweist und vorzugsweise eine Härte von etwa 2,5 kg oder höher, mehr bevorzugt etwa 3 kg oder höher, aufweist.

16. Kaliumsulfatprodukt nach einem der Ansprüche 9 bis 15, wobei das Kaliumsulfat, wenn etwa 1 Gramm in etwa 100 ml Wasser gelöst wird, einen pH-Wert zwischen 2,5 und 7 vorweist.

## Revendications

1. Procédé pour la préparation d'un produit de sulfate de potassium comprenant des micronutriments,
ledit procédé comprenant les étapes consistant à :
- fournir un sulfate de potassium, qui comprend de 1 à 15 % en poids de composés acides, calculés en tant qu'acide sulfurique (100 %), dans lequel la quantité de potassium dans le sulfate de potassium ainsi produit est comprise entre 40 et 51 % en poids, calculée en tant que K₂O, et dans lequel le sulfate de potassium fourni est à une température comprise entre 50 °C et 500 °C, lors de l'ajout du ou des micronutriments,
- mélanger ledit sulfate de potassium, avant la granulation, avec un ou plusieurs micronutriments choisis dans le groupe constitué de sodium, zinc, manganèse, fer, molybdène, cuivre, bore, ou des mélanges de ceux-ci, dans lequel une quantité de composés métalliques est amenée à réagir pour obtenir entre 0,1 et 3 % en poids de sels métalliques, calculés en tant qu'ions métalliques autres que le potassium, et
- appliquer une étape de granulation.

2. Procédé selon la revendication précédente, dans lequel le sulfate de potassium fourni est à une température comprise entre 100 °C et 400 °C, lors de l'ajout du ou des micronutriments.

3. Procédé selon la revendication 1, ledit procédé comprenant les étapes consistant à :
- fournir un sulfate de potassium qui comprend de 1 à 15 % en poids de composés acides, calculés en tant qu'acide sulfurique (100 %), et qui a une température comprise entre 100 °C et 400 °C,
- faire réagir au moins une partie desdits composés acides présents dans le sulfate de potassium, soit directement soit indirectement, avec un ou plusieurs composés métalliques choisis parmi un oxyde, un carbonate, un bicarbonate, un hydroxyde ou un mélange de ceux-ci, dans lequel le métal est choisi parmi zinc, manganèse, fer, molybdène, cuivre, ou des mélanges de ceux-ci, et
- transformer de ce fait le composé métallique en sels métalliques correspondants, plus particulièrement en sulfates métalliques correspondants.

4. Procédé selon l'une quelconque des revendications précédentes, dans lequel la quantité de composés métalliques est amenée à réagir pour obtenir entre 0,5 et 3 % en poids de sels métalliques, calculés en tant qu'ions métalliques autres que le potassium.

5. Procédé selon l'une quelconque des revendications 3 à 4, dans lequel au moins deux desdits composés métalliques sont utilisés, générant un mélange qui comprend par exemple deux à trois ions métalliques différents, chacun comprenant entre 0,1 et 2,9 % en poids, calculés en tant que quantité d'ions métalliques uniquement.

6. Procédé selon l'une quelconque des revendications précédentes, dans lequel la conversion des composés métalliques en sulfates métalliques correspondants est effectuée à une température comprise entre 100 °C et 250 °C, de préférence entre 100 °C et 180 °C.

7. Procédé selon l'une quelconque des revendications précédentes, dans lequel le métal dans le composé métallique est choisi parmi zinc et/ou manganèse, de préférence est le zinc.

8. Procédé selon l'une quelconque des revendications précédentes, dans lequel le composé métallique est un oxyde, de préférence est l'oxyde de zinc.

9. Produit solide de sulfate de potassium, obtenu par le procédé selon la revendication 1, dans lequel la quantité de potassium dans le sulfate de potassium est comprise entre 40 et 51 % en poids, calculée en tant que K₂O, comprenant des granulés qui contiennent à la fois du sulfate de potassium et un ou plusieurs micronutriments choisis dans le groupe constitué de sodium, zinc, manganèse, fer, molybdène, cuivre, bore, ou des mélanges de ceux-ci, dans lequel le produit de sulfate de potassium comprend entre 0,1 et 3 % en poids de sels métalliques, calculés en tant qu'ions métalliques autres que le potassium.

10. Produit solide de sulfate de potassium selon la revendication précédente, dans lequel lesdites particules contiennent des sulfates métalliques de micronutriments, le métal étant choisi parmi zinc, manganèse, fer, molybdène, cuivre, ou des mélanges de ceux-ci.

11. Produit de sulfate de potassium selon la revendication précédente, dans lequel la solubilité de l'ion métallique des sulfates métalliques dans le produit final est d'environ 80 % ou plus, de préférence d'environ 90 % ou plus.

12. Produit de sulfate de potassium selon l'une quelconque des revendications 9 à 11, dans lequel le métal comprend du zinc, et la quantité de zinc dans le produit de sulfate de potassium est comprise entre 0,5 et 2,5 % en poids, de préférence entre 1,5 et 2 % en poids.

13. Produit de sulfate de potassium selon l'une quelconque des revendications 9 à 12, comprenant deux micronutriments différents ou plus, qui sont de préférence choisis dans le groupe constitué de zinc et/ou bore et/ou manganèse.

14. Produit de sulfate de potassium selon l'une quelconque des revendications 9 à 13, dans lequel la quantité de potassium dans le sulfate de potassium est comprise entre 47 et 51 % en poids, calculée en tant que K₂O ; et, dans lequel la quantité de soufre dans le sulfate de potassium est comprise entre 48 et 59 % en poids, calculée en tant que SO₄ ; de préférence est comprise entre 50 et 58 % en poids, calculée en tant que SO₄.

15. Produit de sulfate de potassium selon l'une quelconque des revendications 9 à 14, dans lequel le sulfate de potassium se présente sous forme granulaire, ayant 90 % des particules comprises entre 1,5 et 5 mm, et de préférence a une dureté d'environ 2,5 kg ou plus, plus préférablement d'environ 3 kg ou plus.

16. Produit de sulfate de potassium selon l'une quelconque des revendications 9 à 15, dans lequel le sulfate de potassium, lorsqu'environ 1 gramme est dissous dans environ 100 ml d'eau, donne un pH compris entre 2,5 et 7.
